Europäisches Patentamt

European Patent Office

Office européen des brevets

(11) Veröffentlichungsnummer: **0 370 294**
**A1**

## (12) EUROPÄISCHE PATENTANMELDUNG

(21) Anmeldenummer: 89120423.2

(22) Anmeldetag: 04.11.89

(51) Int. Cl.⁵: **B01D 33/048, B01D 33/46**

(30) Priorität: 19.11.88 DE 3839169

(43) Veröffentlichungstag der Anmeldung:
**30.05.90 Patentblatt 90/22**

(84) Benannte Vertragsstaaten:
**BE DE ES FR GB IT NL**

(71) Anmelder: **BAYER AG**

**D-5090 Leverkusen 1 Bayerwerk(DE)**

(72) Erfinder: **Zander, Hans Günter**
**Friedensstrasse 229**
**D-4150 Krefeld 11(DE)**

(54) **Abstreifvorrichtung für Drehfilter.**

(57) Die vorliegende Erfindung betrifft eine Abstreifvorrichtung für Drehfilter mit Band zum Entfernen
des darauf haftenden Filterkuchens, bestehend aus
einem sich quer zum Band erstreckenden traversenartigen Körper, auf welchem gegen das Band gerichtete Schaber fixiert sind.

FIG. 1

EP 0 370 294 A1

## Abstreifvorrichtung für Drehfilter

Die vorliegende Erfindung betrifft eine Abstreifvorrichtung für Drehfilter mit Band zum Entfernen des darauf haftenden Filterkuchens, bestehend aus einem sich quer zum Band erstreckenden traversenartigen Körper, auf welchem gegen das Band gerichtete Schaber fixiert sind.

Filterkuchen werden normalerweise mit Polypropylenschabern oder mit VA-Messern von Drehfiltern unmittelbar hinter der Umlenkwalze entfernt. In der deutschen Offenlegungsschrift 2 059 137 werden derartige Schabervorrichtungen für Precoat-Filter (Filter mit Filterhilfsmittelschicht) beschrieben. Üblicherweise werden feststehende Schaber eingesetzt. Weiterhin sind aus der deutschen Offenlegungsschrift 3 243 683 hin- und hergehende Schaber bekannt. Zum Stand der Technik gehören außerdem Schaber, die mittels Pneumatik/Hydraulik gegen das Bandfilter angepreßt werden und selbstnachstellend sind (DE 3 243 683).

Diese Schaber oder Messer haben jedoch den großen Nachteil, daß sie das Band beim Abschaben des darauf festhaftenden Filterkuchens häufig beschädigen. Dieses liegt zum einen an der meist großen Breite (z.B. > 3 m) des Bandes, wodurch das Band erstens nicht mehr plan geführt werden kann und außerden über die Breite fertigungsbedingte Unebenheiten aufweist und zum anderen daran, daß der Filterkuchen teilweise nicht abgeschabt wird, sich aufrollt und dann zu Störungen führt bzw. das Band dadurch beschädigt wird.

Aufgabe ist es daher, eine Abstreifvorrichtung für Drehfilter mit Band zur Verfügung zu stellen, durch die die Beschädigung des Bandes vermieden wird.

Diese Aufgabe wird dadurch gelöst, daß der traversenartige Körper Teil einer Kippvorrichtung ist, welche um eine parallel zum traversenartigen Körper angeordnete Achse schwenkbar ist und unter einer entgegen der Laufrichtung des Bandes wirkenden Kraft steht, und daß ein entgegen der Richtung dieser Kraft wirkender Anschlag vorgesehen ist.

Dadurch wird ereicht, daß der Schaber bei übermäßiger Belastung durch den Filterkuchen bzw. Unebenheiten des Bandes abhebt, so daß Beschädigungen vermieden werden. Als Kraft bzw. zu deren Aufbringung dient ein Gewicht oder eine Feder. Diese Kraft läßt sich durch Druck oder Zug aufbringen.

Gemäß einer besonderen Ausführungsform hat die Abstreifvorrichtung einen verstellbaren Anschlag. Durch Einstellen des Anschlages läßt sich die Einwirkungsstelle des Schabers wählen.

Gemäß einer weiteren besonderen Ausführungsform ist eine Überschlagssicherung vorgesehen.

Die Größe der Kraft ist vorzugsweise einstellbar. Dadurch läßt sie sich in Abhängigkeit von der Konsistenz des Filterkuchens variieren.

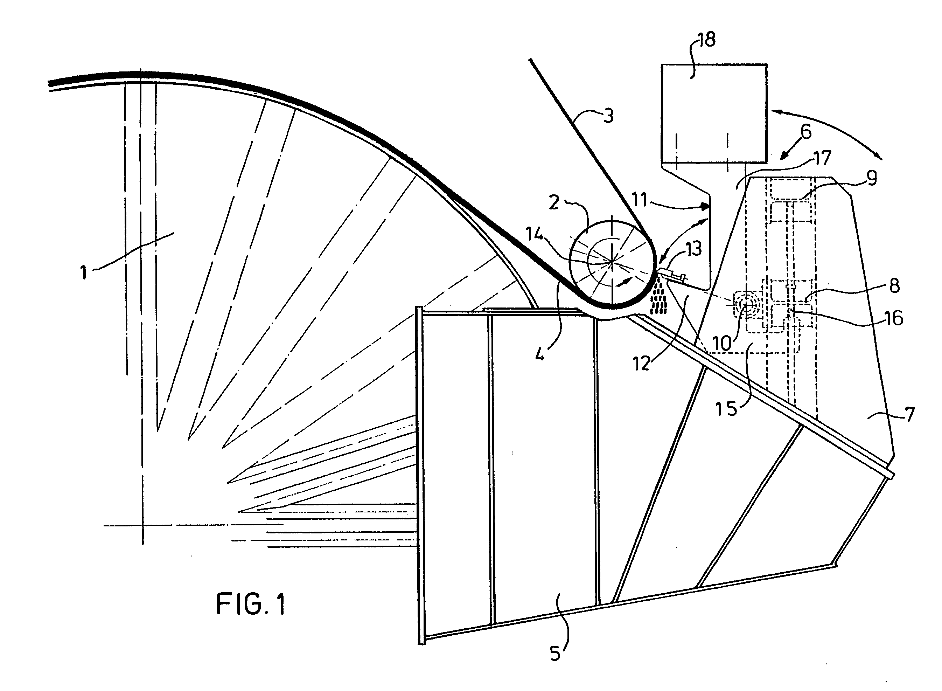

In der Zeichnung ist ein Drehfilter mit Band (Preßband-Drehfilter) im Abriß mit der zugehörigen neuen Abstreifvorrichtung in der Seitenansicht dargestellt und wird nachstehend näher erläutert:

Über eine Trommel 1 und eine Umlenkwalze 2 läuft ein endloses Band 3, an welchem ein Filterkuchen 4 haftet. Auf einer Stützkonsole 5 ist die Abstreifvorrichtung 6 angeordnet. Ihre Lagerung besteht aus zwei seitlichen Lagerböcken 7 (nur der vordere sichtbar) und Traversen 8, 9. An der Traverse 8 ist eine Querachse 10 gelagert, um welche eine Kippvorrichtung 11 schwenkbar ist. Diese Kippvorrichtung 11 besteht aus einem traversenartigen Körper 12, welcher nebeneinander mehrere in ihrem Abstand zum Band 3 einstellbare Schaber 13 trägt. Diese liegen in einer durch die Drehachse 14 der Umlenkwalze 2 und der Querachse 10 gedachten Ebene, indem ein an den Traversen 8, 9 angeordneter einstellbarer, gegen einen Anschlagarm 15 des Körpers 12 wirkender Anschlag 16 entsprechend eingestellt ist. Ein weiterer Arm 17 des Körpers 12 trägt als Kraft ein Gewicht 18 einstellbarer Größe, dessen Schwerpunkt bei normaler Belastung der Schaber 13 durch den Abschabevorgang stets zwischen der Querachse 10 und dem Band 3 liegen muß. Durch Verschieben des fixierbaren Gewichts 18 läßt sich der Hebelarm zur Querachse 10 und damit die über die Schaber 13 auf den Filterkuchen 4 einwirkende Kraft in gewünschter Weise einstellen. Damit die Kippvorrichtung 11 bei zu starker Belastung nicht überschlägt, dient die Traverse 9 gleichzeitig als Überschlagsicherung. Die Abstreifvorrichtung 6 und ihre Verwendung sollen beispielhaft erläutert werden:

Eine Titandioxidhydrat-Suspension wird über Preßband-Drehfilter filtriert. Aufgrund der Konsistenz des Filterkuchens 4 ist zum Abschaben dieses Filterkuchens 4 vom Band eine Kraft von 3 kg/cm erforderlich, welche mittels des Gewichtes 18 eingestellt wird. Die Schaber 13 haben eine Länge von 20 cm. Das bedeutet, daß z.B. auf eine unebene (erhöhte) Stelle im Band 3 auf z.B. 1 cm 60 kg einwirken, wodurch die Gummideckschicht des Bandes 3 noch nicht beschädigt wird. Wird diese Kraft durch Gegenkräfte überschritten, kippt die Kippvorrichtung 11 zurück.

## Ansprüche

1. Abstreifvorrichtung (6) für Drehfilter mit Band (3) zum Entfernen des darauf haftenden Filterkuchens (4), bestehend aus einem sich quer zum Band (3) erstreckenden traversenartigen Körper (12), auf welchem gegen das Band (3) gerichtete Schaber (13) fixiert sind, dadurch gekennzeichnet, daß der traversenartige Körper (12) Teil einer Kippvorrichtung (11) ist, welche um eine parallel zum traversenartigen Körper (12) angeordnete Querachse (10) schwenkbar ist, und unter einer entgegen der Laufrichtung des Bandes (3) wirkenden Kraft (18) steht, und daß ein entgegen der Richtung dieser Kraft (18) wirkender Anschlag (16) vorgesehen ist.

2. Abstreifvorrichtung nach Anspruch 1, dadurch gekennzeichnet, daß der Anschlag (16) verstellbar ist.

3. Abstreifvorrichtung nach Anspruch 1 oder 2, dadurch gekennzeichnet, daß eine Überschlagsicherung (9) vorgesehen ist.

4. Abstreifvorrichtung nach Anspruch 1, 2 oder 3, dadurch gekennzeichnet, daß die Größe der Kraft (18) einstellbar ist.

FIG.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-B-1 071 670 (E.H. POTTER) <br> * Spalten 3-6 * | 1 | B 01 D 33/048 <br> B 01 D 33/46 |
| A | | 2 | |
| A | US-A-2 050 007 (P.C. KEITH) <br> * Seite 3, linke Spalte, Zeilen 22-40; <br> Seite 4, linke Spalte, Zeilen 60-75; <br> rechte Spalte, Zeilen 1-25 * | 1,4 | |
| A | GB-A- 458 670 (ALCO PRODUCTS) <br> * Figure 4 * | 1-4 | |

**RECHERCHIERTE SACHGEBIETE (Int. Cl.5)**

B 01 D

Der vorliegende Recherchenbericht wurde für alle Patentansprüche erstellt

| Recherchenort | Abschlußdatum der Recherche | Prüfer |
|---|---|---|
| DEN HAAG | 13-12-1989 | DE PAEPE P.F.J. |